# DEMANDE DE BREVET EUROPEEN

(11) **EP 2 393 045 A1**
(43) Date de publication de la demande: **07.12.2011**
(21) Numéro de dépôt: 10305592.7
(22) Date de dépôt: 04.06.2010
(51) Int. Cl.: G06K 19/077, G07F 7/08

(54) **Carte bancaire avec écran d'affichage**

(71) Demandeur: Gemalto SA, 92190 Meudon (FR)
(72) Inventeur: Thill, Michel, 92197 Meudon Cedex (FR); Gravez, Pierre, 92197 Meudon Cedex (FR); Marseille, François-Xavier, 92197 Meudon Cedex (FR)

(57) **Abrégé**

Pour permettre l'affichage des dernières transactions effectuées, une carte à puce 100c comprend au moins une puce sécurisée 101c munie d'au moins une interface de communication pour pouvoir communiquer avec un lecteur de carte afin d'effectuer une transaction. La carte comporte en outre un afficheur électronique 103, une batterie autonome 104, et un circuit d'interception 150c relié à l'au moins une interface de communication de la puce sécurisée pour pouvoir intercepter au moins un type de commande et mémoriser au moins une information afin de pouvoir l'afficher sur l'afficheur.

## Description

Les cartes bancaires disposent de puces électroniques pour sécuriser la transaction. La norme EMV a été créée par Europay, Mastercard et Visa dont les initiales font la norme pour définir un standard d'interopérabilité et de sécurité entre carte à puce bancaire. Pour qu'une carte soit certifiée EMV, il faut que celle-ci dispose d'une puce elle-même certifiée qui dispose d'une interface contact selon la norme ISO7816 et/ou sans contact selon la norme ISO14443. Pour limiter les risques de piratage, les puces EMV ne disposent pas d'autre interface de communication.

Par ailleurs, il est aussi connu de faire des cartes à puce disposant d'un écran et un ou plusieurs boutons-poussoirs pour communiquer avec le porteur de carte. Ces cartes sont peu utilisées à l'heure actuelle et servent à générer et à afficher un mot de passe à usage unique pour des transactions par ordinateur. De telles cartes comportent généralement une puce munie d'une interface de communication de carte à puce contact ou sans contact et d'un port de communication destiné à communiquer avec d'autres circuits intégré telle que par exemple une interface de communication 12C ou encore de ports d'entrée/sortie programmable à usage général (GPIO). Il est alors possible à un microcontrôleur de carte à puce de communiquer avec un contrôleur d'affichage qui pilote un écran à cristaux liquides ou un afficheur dit à « encre électronique ».

Une idée serait de faire une carte bancaire disposant d'un écran pour afficher les dernières transactions effectuées. Un problème survient alors si l'on souhaite réaliser une carte à puce au standard EMV. Ces puces ne disposent pas de port d'entrée/sortie supplémentaire pour ce type d'application et pour des raisons de sécurité, il est préféré de ne pas ajouter d'autre ports d'entrée/sortie.

Il n'est donc pas possible de piloter l'affichage à partir d'une puce EMV. Une solution est donc nécessaire pour pouvoir afficher les dernières transactions effectuée sur une carte à puce.

L'invention est une solution au problème posé. Pour permettre l'affichage des dernières transactions, un deuxième microcontrôleur est ajouté sur la carte à puce afin de réaliser une fonction d'interception et de stockage des informations de transactions.

Plus particulièrement, l'invention est une carte à puce pour transaction sécurisée comprenant au moins une puce sécurisée munie d'une interface de communication pour pouvoir communiquer avec un lecteur de carte afin d'effectuer une transaction, caractérisé en ce que la carte comporte en outre un afficheur électronique, une batterie autonome, un circuit d'interception relié à l'interface de communication de la puce sécurisée pour pouvoir intercepter au moins un type de commande et mémoriser au moins une information afin de pouvoir l'afficher sur l'afficheur.

Préférentiellement, le circuit d'interception mémorise une information échangée en clair entre la puce sécurisée et le lecteur de carte. L'information interceptée peut être un montant de transaction effectuée.

Selon différents modes de réalisation, la carte comporte un actionneur pour permettre à un porteur de ladite carte d'afficher l'information interceptée. L'actionneur peut être un capteur de mouvement. L'actionneur peut être un bouton poussoir servant à amorcer la mise sous tension de l'afficheur et du circuit d'interception à l'aide de la batterie autonome et dans laquelle une temporisation coupe l'alimentation. La carte peut aussi comporter un capteur d'utilisation pour inhiber ou autoriser le fonctionnement du circuit d'interception. Le capteur d'utilisation est par exemple un capteur de lumière.

Selon différentes variantes de mise en oeuvre, l'interface de communication peut être une interface à contact et dans laquelle le circuit d'interception est relié en parallèle sur les contacts de la carte, et/ou peut être une interface sans contact disposant d'une première antenne ayant la forme de spires à l'intérieur de la carte et dans laquelle le circuit d'interception dispose d'une deuxième antenne ayant la forme de spires à l'intérieur de la carte, la première et la deuxième antenne partageant un flux électromagnétique commun. Si la puce sécurisée dispose de deux interfaces de communication alors le circuit d'interception est relié aux deux interfaces.

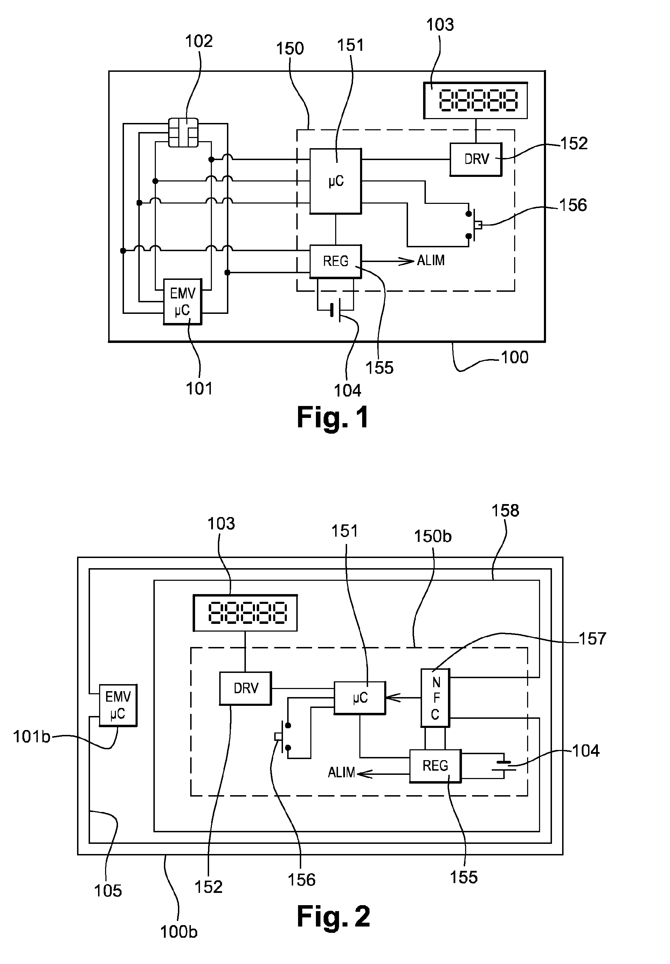

L'invention sera mieux comprise, et d'autres particularités et avantages apparaîtront à la lecture de la description qui va suivre, la description faisant référence aux dessins annexés, parmi lesquels les figures 1 à 3 représentent trois modes de réalisation de l'invention.

La figure 1 représente un schéma fonctionnel d'un premier mode de réalisation de l'invention. Dans ce mode de réalisation, la carte bancaire 100 est une carte à puce à contacts qui comporte une puce sécurisée 101 muni d'une interface de communication conforme à la norme ISO 7816 et reliée à une connecteur 102 comportant des plages de contact également définies par la norme 7816. La puce sécurisée 101 est par exemple une puce répondant au standard EMV et comporte des données à accès restreint et d'autre données dites publiques. Les données à accès restreint nécessitent l'utilisation de mot de passe ou messages cryptés alors que les données publiques peuvent être accédées en lecture et/ou en écriture par tout lecteur conforme à la norme ISO7816.

Lors d'un paiement qui utilise la puce sécurisée 101, la carte bancaire 100 est insérée dans un lecteur sécurisé qui effectue une vérification d'un code PIN rentré par le porteur de la carte pour vérifier que le porteur de la carte est le bon, vient ensuite des échanges d'information sécurisés via des messages cryptés entre la carte, le lecteur et éventuellement un serveur distant pour vérifier si le débit de la carte est autorisé ou non. Lorsque la transaction est terminée, des informations sont mises à jour dans la carte et dans le lecteur pour indiquer le montant de la transaction effectuée et éventuellement le solde restant de la carte. Les montants de transaction effectués qui sont stockés dans la carte n'ayant aucune valeur juridique et n'étant pas porteur d'information confidentielle, ceux-ci sont généralement enregistrés dans une zone de mémoire non sécurisée et donc accessible par n'importe quel type de lecteur conforme à la norme ISO7816. Ces données n'étant pas des données sensibles elles sont échangées en clair à l'aide de commandes d'écriture identifiables.

Afin de réaliser l'affichage des dernières transactions effectuées, la carte bancaire 100 est munie d'un afficheur électronique 103, d'une Batterie 104 et d'un circuit d'interception de commandes 150. Le circuit d'interception 150 peut être réalisé en un seul circuit intégré ou comporter éventuellement plusieurs circuits. En termes de fabrication, le circuit d'interception 150 peut être réalisé sur un substrat dans le corps de carte par lamination selon une méthode connue qui dispose de contact avec la face arrière des plages de contact du connecteur 102, selon une technique connue.

L'afficheur électronique 103 peut être de type à cristaux liquides ou de type à encre électronique utilisant des microbilles. L'important est que cet afficheur 103 soit suffisamment fin pour être intégré dans une carte à puce et doit également être à faible consommation. La batterie 104 est une batterie ultra plate intégrable dans une carte à puce. En fonction de la durée de vie désirée de la carte et de la consommation du circuit d'interception 150 et de l'afficheur 103, on peut choisir une batterie rechargeable ou non-rechargeable.

Le circuit d'interception 150 comporte microcontrôleur 151 constituant l'intelligence du dispositif et comportant les programmes nécessaires au fonctionnement de l'ensemble, un circuit de pilotage 152 pour commander l'afficheur électronique 103, un régulateur d'alimentation 155, et un bouton poussoir 156.

Le microcontrôleur 151 est l'élément de contrôle général du circuit d'interception. Le circuit de pilotage 152 sert à transformer un nombre à écrire fourni par le microcontrôleur 151 en signaux électriques de commande de l'afficheur électronique 103. Le régulateur d'alimentation 155 sert à transformer la tension fournie par la batterie en tension d'alimentation pour l'afficheur 103 et le circuit le circuit d'interception 150. Le régulateur d'alimentation 155 peut également servir de chargeur de batterie si la batterie 104 est de type rechargeable. Le rechargement de la batterie s'effectue lorsque la carte est reliée à un lecteur externe pendant une transaction.

Le microcontrôleur 151 est connecté aux plages de contact du connecteur 102 pour pouvoir lire tous les messages échangés entre la puce sécurisée 101 et un lecteur de carte. Lors d'une transaction entre la carte 100 et un lecteur, par exemple de type terminal de paiement, le microcontrôleur reçoit tous les échanges de commande et toutes les données qui transitent sur le connecteur 102. Lorsque le microcontrôleur 151 détecte une commande qui correspond à l'inscription du montant de la transaction dans la puce sécurisé 101, le microcontrôleur 151 mémorise de manière non volatile cette information.

Le bouton poussoir 156 est un actionneur accessible par le porteur de carte pour déclencher l'affichage des dernières transactions. Suite à une action sur le bouton poussoir 156, le microcontrôleur 151 va réveiller le circuit d'interception. Le microcontrôleur 151 effectue ensuite la lecture de la dernière transaction qu'il a mémorisée et va envoyer une séquence de commande au circuit de pilotage 152 pour afficher le montant sur l'afficheur 103.

Un nouvel appui sur le bouton poussoir 156 peut entrainer la lecture et l'affichage de la précédente transaction qui a été mémorisée. Un appui de longue durée peut mettre fin à la lecture des transactions et passer à un mode de veille où l'alimentation de la puce sécurisée 101, de l'afficheur 103, de l'interface 153 et du circuit de pilotage est coupée et où seul l'alimentation du microcontrôleur 151 est assurée pour la partie permettant le réveil via une nouvelle action sur le bouton poussoir. L'absence d'appui sur le bouton poussoir 156 pendant une longue durée prédéterminée, par exemple 1 à 2 minutes peut également provoquer la mise en veille du système.

En variante, afin d'économiser la batterie au maximum, l'utilisation du bouton poussoir peut amorcer la mise sous tension des éléments de la carte par le contact établit directement par le bouton poussoir pour amorcer un interrupteur électronique. L'avantage d'un tel système est que l'on peut utiliser une temporisation par exemple de une à deux minutes pour désamorcer l'interrupteur électronique et couper complètement le courant dans la carte.

La figure 2 représente un schéma fonctionnel d'un deuxième mode de réalisation de l'invention. Pour des raisons de simplification de description, les éléments communs entre le premier et deuxième mode de réalisation portent les mêmes références et ne seront pas plus amplement décrits. Egalement les éléments équivalents porteront une référence faisant également référence au premier mode de réalisation par l'adjonction d'un « b ».

Dans ce deuxième mode de réalisation, la carte bancaire 100b est une carte à puce sans contact qui comporte une puce sécurisée 101 b munie d'une interface de communication conforme à la norme ISO 14443 et reliée à une antenne 105 constituée de spires placées à l'intérieur du corps de carte. La puce sécurisée 101 b est par exemple une puce répondant au standard EMV et comporte des données à accès restreint et d'autres données dites publiques. Les données à accès restreint nécessitent l'utilisation de mots de passe ou messages cryptés alors que les données publiques peuvent être accédées en lecture et/ou en écriture par tout lecteur conforme à la norme ISO14443.

Lors d'un paiement qui utilise la puce sécurisée 101b, la carte bancaire 100b est placée devant l'antenne d'un lecteur sécurisé, des échanges d'informations sécurisés via des messages cryptés entre la carte, le lecteur et éventuellement un serveur distant sont effectués pour vérifier si le débit de la carte est autorisé ou non. Lorsque la transaction est terminée, des informations sont mises à jour dans la carte et dans le lecteur pour indiquer le montant de la transaction effectuée et éventuellement le solde restant de la carte. Les montants de transaction effectués qui sont stockés dans la carte n'ayant aucune valeur juridique et n'étant pas porteur d'information confidentielle, ceux-ci sont généralement enregistrés dans une zone de mémoire non sécurisée et donc accessible par n'importe quel type de lecteur conforme à la norme IS014443. En outre la commande qui indique l'écriture du montant de la transaction est aussi envoyée en clair.

Afin de réaliser l'affichage des dernières transactions effectuées, la carte bancaire 100b est munie d'un afficheur électronique 103, d'une Batterie 104 et d'un circuit d'interception 150b. Le circuit d'interception 150b diffère du premier mode de réalisation par l'utilisation d'une interface de communication 157 conforme à la norme ISO 14443 et reliée à une antenne 158. L'antenne 158 est une antenne composée de plusieurs spires et est également placée à l'intérieur du corps de carte. Les antennes 105 et 158 sont réalisées afin de partager un flux électromagnétique commun afin que l'antenne reçoit l'intégralité des données reçues et émises par la puce sécurisée 101 b. Ces deux antennes sont en outre configurées pour ne pas se perturber lorsqu'elles partagent le flux électromagnétique d'un lecteur situé hors carte.

L'interface 157 permet également de récupérer de l'énergie d'un lecteur externe afin de permettre de recharger la batterie 104 par l'intermédiaire du régulateur d'alimentation 155. Lorsque cette interface 157 détecte un champ externe créé par un lecteur de carte, l'interface 157 l'indique au microcontrôleur 151 qui réveille le circuit d'interception 150b. Le microcontrôleur 151 est programmé pour écouter les échanges de données mais n'est pas configuré pour se signaler automatiquement dès la détection du champ. Une transaction peut donc s'effectuer entre la puce sécurisée 101 b et le lecteur de carte sans que le circuit d'interception 150b ne vienne perturber l'échange d'information. Lorsque le microcontrôleur 151 détecte une commande qui correspond à l'inscription du montant de la transaction dans la puce sécurisé 101 b, le microcontrôleur 151 mémorise de manière non volatile cette information.

Lors d'un appui ultérieur sur le bouton poussoir 156, les informations de transaction sont alors affichées comme indiqué en relation avec la figure 1.

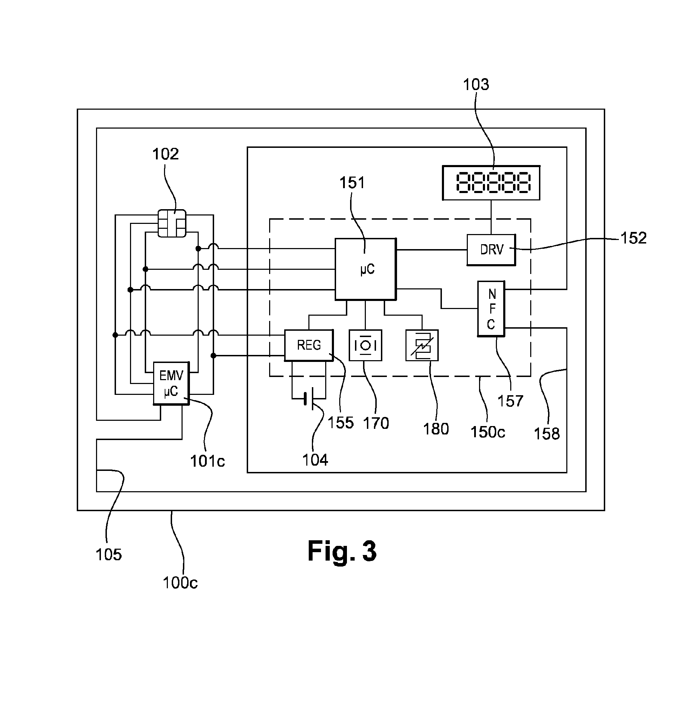

La figure 3 représente un schéma fonctionnel d'un troisième mode de réalisation de l'invention qui en outre incorpore des améliorations qui peuvent aussi être utilisées en combinaison avec l'un des modes de réalisation précédemment décrits. Pour des raisons de simplification de description, les éléments communs entre le premier, le deuxième et le troisième mode de réalisation portent les mêmes références et ne seront pas plus amplement décrit. Egalement les éléments équivalents porteront une référence faisant également référence aux autres modes de réalisation par l'adjonction d'un « c ».

Dans ce troisième mode de réalisation, la carte bancaire 100c est une carte à puce mixte qui comporte une puce sécurisée 101c munie d'une interface de communication conforme à la norme ISO 7816 qui reliée à un connecteur 102 comportant des plages de contact également définies par la norme 7816 et également munies d'une interface de communication conforme à la norme ISO 14443 et reliée à une antenne 105 constituée de spires placées à l'intérieur du corps de carte. La puce sécurisée 101c est par exemple une puce répondant au standard EMV et comporte des données à accès restreint et d'autres données dites publiques. Les données à accès restreint nécessitent l'utilisation de mot de passe ou messages cryptés alors que les données publiques peuvent être accédées en lecture et/ou en écriture par tout lecteur conforme à la norme ISO7816 ou conforme à la norme ISO14443. Quelle que soit la communication utilisée, filaire ou sans fil, les données de transaction sont envoyées par l'intermédiaire de commande d'écriture en clair, c'est-à-dire non cryptée.

Afin de réaliser l'affichage des dernières transactions effectuées, la carte bancaire 100c est munie d'un afficheur électronique 103, d'une Batterie 104 et d'un circuit d'interception 150c. Le circuit d'interception 150c diffère des deux modes de réalisation précédents par l'utilisation simultanée d'une liaison du microcontrôleur 151 aux plages de contact du connecteur 102, et d'une interface de communication 157 conforme à la norme ISO 14443 et reliée à une antenne 158.

Parmi les autres changements, le bouton poussoir 156 est remplacé par un accéléromètre 170 afin d'éviter des problèmes d'usure et de faux contacts liés à l'utilisation des boutons poussoirs qui sont particulièrement sensibles sur les cartes à puce. Ainsi un geste permet de mettre en tension le circuit d'interception et l'afficheur pour afficher une transaction. Il est possible d'utiliser des signatures de mouvement pour pouvoir distinguer si l'on souhaite voir un type de transaction en particulier, tel que par exemple la précédente ou la suivante.

Egalement, l'utilisation d'un bouton poussoir ou même d'un accéléromètre peut déclencher l'alimentation du circuit d'interception 150c et de l'afficheur 103 alors que la carte est dans un lecteur ou dans une poche. Ce type de déclenchement peut causer un déchargement prématuré de la batterie. Afin de remédier à ce déchargement prématuré de la batterie, l'utilisation d'un capteur de lumière 180 couplé avec le microcontrôleur 151 permet d'inhiber le fonctionnement si le capteur ne capte pas une lumière suffisante.

## Revendications

1. Carte à puce (100, 100b, 100c) pour transaction sécurisée comprenant au moins une puce sécurisée (101, 101b, 101c) munie d'une interface de communication pour pouvoir communiquer avec un lecteur de carte afin d'effectuer une transaction, **caractérisé en ce que** la carte comporte en outre :
- un afficheur électronique (103),
- une batterie autonome (104),
- un circuit d'interception (150, 150b, 150c) relié à l'interface de communication de la puce sécurisée pour pouvoir intercepter au moins un type de commande et mémoriser au moins une information afin de pouvoir l'afficher sur l'afficheur.

2. Carte selon la revendication 1, dans laquelle le circuit d'interception mémorise une information échangée en clair entre la puce sécurisée et le lecteur de carte.

3. Carte selon la revendication 2, dans laquelle l'information interceptée est un montant de transaction effectuée.

4. Carte selon la revendication 1, dans laquelle la carte comporte un actionneur (156, 170) pour permettre à un porteur de ladite carte d'afficher l'information interceptée.

5. Carte selon la revendication 4, dans laquelle l'actionneur est un capteur de mouvement (170).

6. Carte selon la revendication 1, dans laquelle la carte comporte un capteur d'utilisation (180) pour inhiber ou autoriser le fonctionnement du circuit d'interception.

7. Carte selon la revendication 6, dans laquelle le capteur d'utilisation est un capteur de lumière (180).

8. Carte selon la revendication 1, dans laquelle l'interface de communication est une interface à contact et dans laquelle le circuit d'interception est relié en parallèle sur les contacts de la carte.

9. Carte selon la revendication 1, dans laquelle l'interface de communication est une interface sans contact disposant d'une première antenne (105) ayant la forme de spires à l'intérieur de la carte et dans laquelle le circuit d'interception (150b, 150c) dispose d'une deuxième antenne (158) ayant la forme de spires à l'intérieur de la carte, la première et la deuxième antenne (105, 158) partageant un flux électromagnétique commun.

10. Carte selon la revendication 1, dans laquelle la puce sécurisée dispose de deux interfaces de communication et dans laquelle le circuit d'interception est relié aux deux interfaces.

11. Carte selon la revendication 4, dans laquelle l'actionneur est un bouton poussoir (156) servant à amorcer la mise sous tension de l'afficheur (103) et du circuit d'interception (150, 150b, 150c) à l'aide de la batterie autonome (104) et dans laquelle une temporisation coupe l'alimentation.
